# FASCICULE DE BREVET EUROPEEN

(11) **EP 3 159 226 B1**
(45) Date de publication et mention de la délivrance du brevet: **21.08.2019**
(21) Numéro de dépôt: 16193429.4
(22) Date de dépôt: 12.10.2016
(51) Int. Cl.: B60S 1/40, B60S 1/38

(54) **DISPOSITIF DE CONNEXION INTERPOSÉ ENTRE UN BRAS DE MANOEUVRE ET UN BALAI D ESSUYAGE D'UN PARE-BRISE DE VÉHICULE AUTOMOBILE**
VERBINDUNGSVORRICHTUNG, DIE ZWISCHEN EINEM BETÄTIGUNGSARM UND EINEM SCHEIBENWISCHERARM EINES KRAFTFAHRZEUGS POSITIONIERT IST
CONNECTION DEVICE INTRODUCED BETWEEN A MANOEUVRING ARM AND A WIPER BLADE OF A MOTOR VEHICLE WINDSCREEN

(30) Priorité: 22.10.2015 FR 1560062
(43) Date de publication de la demande: 26.04.2017
(73) Titulaire: Valeo Systèmes d'Essuyage, 78322 Le Mesnil Saint Denis (FR)
(72) Inventeur: HANINO, Marie-Therese, 63270 Parent (FR); MONEYRON, Patrick, 63670 LE CENDRE (FR); ESPINASSE, Philippe, 63114 COUDES (FR)
(74) Mandataire: Vincent, Catherine Marie Marguerite

(56) Documents cités:
- EP-A1- 1 847 426
- EP-A1- 2 108 552
- DE-A1- 19 924 662
- US-A1- 2004 074 037
- US-A1- 2013 185 889

## Description

Le domaine de la présente invention est celui des systèmes d'essuyage destinés à équiper un véhicule automobile. Elle a pour objet un dispositif de connexion interposé entre un bras de manoeuvre et un balai d'essuyage d'une surface vitrée du véhicule. Elle a aussi pour objet un balai d'essuyage équipé d'un tel dispositif de connexion. Elle a encore pour objet un système d'essuyage comprenant un tel balai d'essuyage et un bras pour la manoeuvre d'un tel balai, reliés par un dispositif de connexion.

Les véhicules automobiles sont couramment équipés d'un système d'essuyage pour assurer un balayage et un lavage d'un pare-brise et éviter que la vision qu'a le conducteur de son environnement ne soit perturbée. Ce système d'essuyage comprend un bras de manoeuvre qui est porteur d'un balai d'essuyage et qui effectue un mouvement de va-et-vient angulaire le long du pare-brise. Le balai d'essuyage est porteur d'une lame racleuse réalisée en une matière élastique. La lame racleuse frotte contre le pare-brise et évacue l'eau en l'amenant en dehors du champ de vision du conducteur. Le balai d'essuyage est réalisé sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans cette seconde solution, le balai d'essuyage est rattaché au bras de manoeuvre par un dispositif de connexion interposé entre le bras de manoeuvre et le balai d'essuyage.

Le document FR 2841852 A1 décrit un dispositif de connexion du genre susvisé qui s'avère complexe, fragile et peu fiable. De plus, un tel dispositif de connexion comprend un nombre important de pièces qu'il est souhaitable de réduire le plus possible. Enfin, un tel dispositif de connexion n'est pas adapté pour être aisément monté sur une gamme de véhicules automobiles comportant indifféremment une direction à droite ou bien une direction à gauche, c'est-à-dire un véhicule automobile dont un volant de direction est indifféremment installé d'un côté droit ou bien d'un côté gauche du véhicule automobile. Or, pour des raisons de production, de référencement et/ou de stockage, il est souhaitable de disposer d'un balai d'essuyage dont le montage est indifféremment possible sur un véhicule automobile comportant une direction à droite ou bien une direction à gauche, ce que ne prévoit pas le balai d'essuyage décrit par le document FR 2841852 A1. DE-A-19924662 montre le préambule de la revendication 1.

Un but de la présente invention est de proposer un dispositif de connexion destiné à être interposé entre un bras de manoeuvre et un balai d'essuyage d'une surface vitrée du véhicule automobile, le dispositif de connexion étant simple, peu encombrant et comportant un nombre de pièces qui est le plus réduit possible, le dispositif de connexion étant aisément assemblable sur un véhicule automobile comportant indifféremment une direction à droite ou bien une direction à gauche, pour offrir une visibilité optimisée à un conducteur du véhicule automobile.

Un dispositif de la présente invention est un dispositif de connexion destiné à être interposé entre un bras de manoeuvre et un balai d'essuyage d'une surface vitrée d'un véhicule, notamment automobile. Le dispositif de connexion comprend une pièce de maintien porteuse du balai d'essuyage et apte à être rapportée sur une partie de connexion du bras de manoeuvre. La partie de connexion comprend un doigt et une broche.

Selon la présente invention, la pièce de maintien comprend un plot pourvu d'un logement qui est apte à recevoir le doigt de la partie de connexion. Le logement est débouchant par l'intermédiaire d'un premier orifice ménagé à travers une première face du plot. Le plot est équipé d'au moins une platine pourvue d'un organe de réception apte à retenir une languette que comprend la broche. La platine est délimitée par au moins une première surface et une deuxième surface qui sont parallèles à l'une quelconque au moins de la première face et de la deuxième face et la platine est d'une épaisseur de platine prise, selon un axe transversal disposé orthogonalement à l'axe longitudinal, et mesurée entre la première surface et la deuxième surface, qui est strictement inférieure à une épaisseur de plot mesurée entre la première face et la deuxième face, selon cet axe transversal.

Le dispositif de connexion comprend avantageusement au moins une des caractéristiques suivantes prise seule ou en combinaison :
- le logement débouche par l'intermédiaire d'un deuxième orifice ménagé à travers une deuxième face du plot,
- au moins le plot, un plateau duquel est issu le plot, et la platine forment un ensemble monobloc, notamment réalisés par moulage d'un matériau polymère,
- la platine s'étend à l'intérieur d'un plan de platine, qui est orthogonal à un plan de plateau dans lequel le plateau s'étend et qui est parallèle à un axe longitudinal selon lequel la pièce de maintien s'étend,

Selon une variante, la pièce de maintien est pourvue d'une unique platine dont la première surface est ménagée indifféremment dans le prolongement de la première face ou de la deuxième face du plot.

Selon une autre variante, la pièce de maintien est pourvue de deux platines, dont une première platine qui comporte une première surface ménagée parallèlement à la première face du plot et une deuxième platine qui comporte une première surface ménagée parallèlement à la deuxième face du plot.

Le plot est par exemple parallélépipédique.

Selon une variante, l'organe de réception est constitué de la première surface de la platine.

Selon une autre variante, l'organe de réception est constitué d'une cavité ménagée à travers ou dans la platine. La cavité est par exemple traversante, en ce sens qu'elle est débouchante de part et d'autre de la pièce de maintien. Alternativement, la cavité est borgne, notamment en étant fermée à une extrémité de la cavité située du côté de la lame d'essuyage.

Le dispositif de connexion comprend aussi avantageusement au moins une des caractéristiques suivantes prise seule ou en combinaison :
- l'organe de réception est ménagé selon le plan de platine,
- le logement est ménagé selon un plan médian de la pièce de maintien,
- le logement est ménagé selon l'axe transversal qui est parallèle au plan de plateau,
- chaque extrémité de la pièce de maintien est munie d'un capot apte à couvrir un déflecteur d'air équipant le balai d'essuyage,
- le plateau est bordé de deux rebords latéraux qui sont ménagés parallèlement à l'axe longitudinal.

La présente invention porte également sur un balai d'essuyage équipé d'un tel dispositif de connexion.

La présente invention porte aussi sur un système d'essuyage comprenant un tel balai d'essuyage et le bras de manoeuvre pourvu de la partie de connexion, ladite partie de connexion comprenant un corps équipé du doigt et de la broche qui sont ménagés parallèlement entre eux, le doigt étant apte à être reçu à l'intérieur du logement et la languette étant apte à être maintenue par ou contre l'organe de réception.

Ces dispositions sont telles que le dispositif de connexion standardisé pour une pluralité de véhicules différents. Le dispositif de connexion est également simple, peu encombrant et comporte un nombre de pièces qui est le plus réduit possible. Le même dispositif de connexion est aisément assemblable sur un véhicule automobile comportant indifféremment une direction à droite ou bien une direction à gauche, pour offrir une visibilité optimisée à un conducteur du véhicule automobile.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un système d'essuyage selon l'invention,
- la figure 2 est une vue partielle, en perspective, du système d'essuyage illustré sur la figure 1 et comprenant un dispositif de connexion selon l'invention,
- la figure 3 est une vue en perspective d'une partie de connexion d'un bras de manoeuvre sur laquelle le dispositif de connexion selon l'invention se monte,
- la figure 4 est une vue de derrière d'une première variante de réalisation d'une pièce de maintien constitutive du dispositif de connexion illustré sur la figure 1,
- la figure 5 est une vue de face de la pièce de maintien illustrée sur la figure 4,
- la figure 6 est une vue de dessus de la pièce de maintien illustrée sur les figures 4 et 5,
- la figure 7 est une vue de derrière d'une deuxième variante de réalisation de la pièce de maintien constitutive du dispositif de connexion illustré sur la figure 1,
- la figure 8 est une vue de face de la pièce de maintien illustrée sur la figure 7,
- la figure 9 est une vue de dessus de la pièce de maintien illustrée sur les figures 7 et 8,
- la figure 10 est une vue en perspective de la pièce de maintien illustrée sur les figures 4, 5 et 6,
- la figure 11 est une vue en perspective d'une variante de réalisation de la pièce de maintien illustrée sur les figures 4, 5, 6 et 10,
- la figure 12 est une vue en perspective de la pièce de maintien illustrée sur les figures 4, 5, 6 et 10 et équipée d'une forme de réalisation de la partie de connexion illustrée sur la figure 3,
- la figure 13 est une vue en perspective de la pièce de maintien illustrée sur la figure 11 et équipée d'une autre forme de réalisation de la partie de connexion illustrée sur la figure 3.

Il faut tout d'abord noter que les figures exposent l'invention de manière détaillée pour mettre en oeuvre l'invention, lesdites figures pouvant bien entendu servir à mieux définir l'invention le cas échéant.

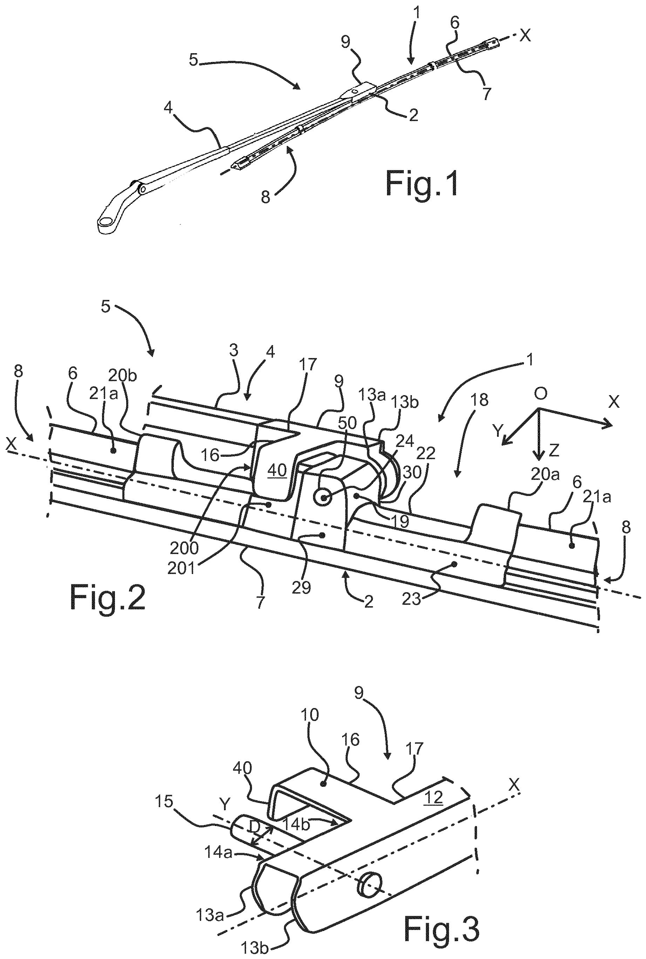

Sur les figures 1 et 2, les dénominations longitudinale ou transversale, dessus, dessous, devant, derrière se réfèrent à l'orientation d'un balai d'essuyage 1 et/ou d'un dispositif de connexion 2 selon l'invention. Une direction longitudinale correspond à un axe longitudinal X selon lequel s'étend le balai d'essuyage 1. Une direction transversale correspond à un axe transversal Y perpendiculaire à l'axe longitudinal X du balai d'essuyage 1. Pour les directions longitudinales, les dénominations extérieure ou intérieure s'apprécient par rapport à un point de pivotement du balai d'essuyage 1 sur un bras de manoeuvre 4 du balai d'essuyage 1, la dénomination intérieure correspondant à la partie où le bras de manoeuvre 4 et un demi-balai s'étendent. Enfin, les directions référencées comme supérieures ou inférieures correspondent à des orientations perpendiculaires à un plan de rotation du balai d'essuyage 1, la dénomination inférieure contenant le plan d'une surface vitrée, par exemple un pare-brise.

Plus particulièrement, l'axe longitudinal X correspond à un axe Ox d'un repère orthonormé Oxyz et l'axe transversal Y correspond à un axe Oy dudit repère.

Sur la figure 1, un véhicule automobile est couramment équipé d'un système d'essuyage 5 pour évacuer une eau et/ou des salissures présentes sur une surface vitrée du véhicule automobile. Le système d'essuyage 5 comprend le bras de manoeuvre 4 qui est apte à effectuer un mouvement de va-et-vient angulaire le long et au-dessus du pare-brise. La surface vitrée est indifféremment un pare-brise avant ou une lunette arrière équipant le véhicule automobile. Dans suite de la description, le pare-brise servira d'exemple de la surface vitrée. Le véhicule automobile comporte indifféremment une direction à droite ou bien une direction à gauche, c'est-à-dire que le véhicule automobile est pourvu d'un volant de direction qui est indifféremment installé d'un côté droit ou bien d'un côté gauche du véhicule automobile. Le dispositif de connexion 2 de la présente invention est avantageusement adaptable à un véhicule automobile dont la direction est indifféremment à droite ou à gauche, tout en procurant une visibilité optimisée au conducteur du véhicule automobile.

Le balai d'essuyage 1 est équipé du dispositif de connexion 2 qui assure une liaison mécanique entre le bras de manoeuvre 4 et le balai d'essuyage 1 et permet ainsi de séparer le balai d'essuyage 1 du bras de manoeuvre 4, en vue d'un remplacement du balai d'essuyage 1.

Le balai d'essuyage 1 comprend au moins un déflecteur d'air 6 et une lame racleuse 7. Le déflecteur d'air 6 est prévu pour transformer une pression appliquée par un flux d'air circulant le long du pare-brise en une force d'appui du balai d'essuyage 1 contre le pare-brise du véhicule automobile. La lame racleuse 7 est la pièce du balai d'essuyage 1 en contact direct avec le pare-brise pour évacuer l'eau et/ou les salissures présentes sur ce dernier. Le déflecteur d'air 6 et la lame racleuse 7 forment un ensemble semi-rigide 8 qui est porté par le dispositif de connexion 2.

En se reportant également sur la figure 2, le bras de manoeuvre 4 comprend une partie de connexion 9 qui peut notamment être rapportée à une extrémité d'une tige 3 constitutive du bras de manoeuvre 4. La partie de connexion 9 peut comprendre un corps 12 au bout duquel sont ménagées deux ailettes 13a, 13b, parallèles l'une à l'autre et qui s'étendent dans le prolongement du corps 12. Plus particulièrement, une première ailette 13a comporte une première face 14a et le corps 12 comporte une deuxième face 14b, la première face 14a et la deuxième face 14b étant ménagées parallèlement l'une à l'autre. Plus particulièrement encore, la première face 14a et la deuxième face 14b sont ménagées dans le prolongement l'une de l'autre et parallèlement à l'axe longitudinal X.

Sur la figure 3, on constate que la partie de connexion 9 comprend un doigt 15 et une broche 16 qui sont ménagés selon une direction parallèle à l'axe transversal Y, c'est-à-dire transversale et perpendiculaire à l'axe longitudinal X. Le doigt 15 est notamment conformé en un cylindre d'un diamètre D. La broche 16 s'étend perpendiculairement à une arête supérieure 17 du corps 12. La broche 16 comprend une patte 10 et une languette 40, cette dernière s'étendant dans un plan perpendiculaire, ou sensiblement perpendiculaire, à un plan passant par la patte 10. La languette 40, visible sur les figures 2 ou 3, est ménagée sensiblement parallèlement à la deuxième face 14b.

Tel que représenté sur la figure 2, le dispositif de connexion 2 comprend une pièce de maintien 18 qui est configurée pour porter le balai d'essuyage 1, et notamment le déflecteur d'air 6, la lame racleuse 7 et des éléments de structure du balai lui conférant un profil longitudinal courbé, ainsi qu'une flexibilité. Selon un mode de réalisation, ces éléments de structure sont une unique bande métallique souple sur laquelle la pièce de maintien 18 est solidarisée, et contre laquelle la lame racleuse 7 est solidarisée par un adhésif ou un collage. Selon un autre mode de réalisation, ces éléments de structure sont deux bandes métalliques souples, installées de manière coplanaire chacune dans une gorge longitudinale d'un talon que la lame racleuse 7 comporte. Selon encore un autre mode de réalisation, ces éléments de structure sont formés par une unique bande métallique souple logée dans une pièce de support plastique, la pièce de support étant multifonctions en ce sens qu'elle est configurée pour s'accrocher de manière amovible avec le déflecteur d'air 6 et/ou avec la lame racleuse 7.

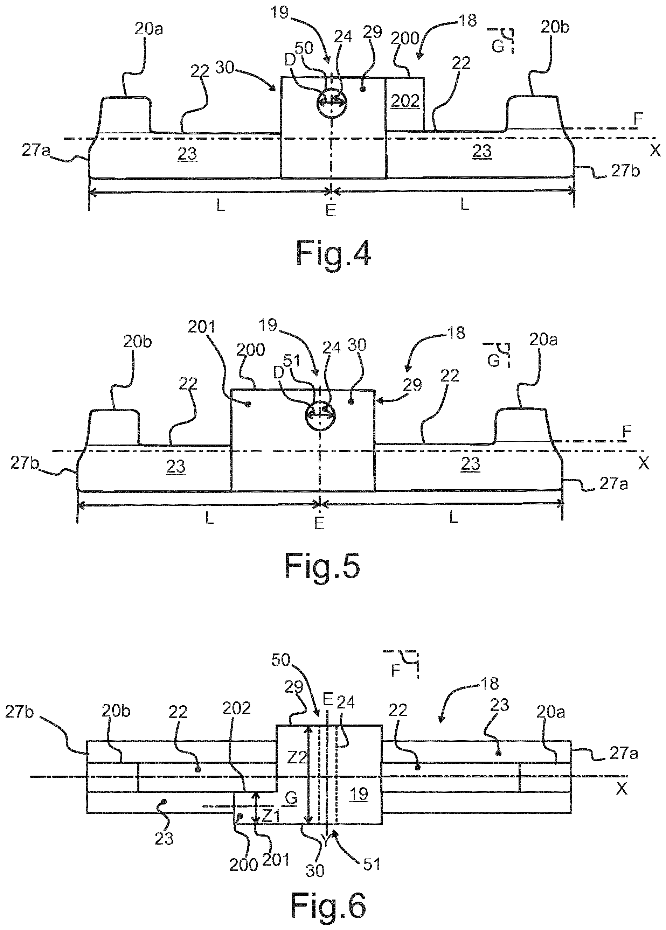

En se reportant également sur les figures 4 à 13, la pièce de maintien 18 est agencée en une baguette qui s'étend selon l'axe longitudinal X. La pièce de maintien 18 comprend un plot 19 qui est notamment disposé au milieu de la pièce de maintien 18 selon l'axe longitudinal X. Selon une variante, le plot 19 est décalé par rapport à un tel milieu de la pièce de maintien 18 selon l'axe longitudinal X. Dans ce cas, le plot est décentré longitudinalement.

Chaque extrémité de la pièce de maintien 18 est munie d'un capot 20a, 20b de couverture du déflecteur 6, et notamment d'une extrémité d'une aile du déflecteur d'air 6. Autrement dit et comme visible sur la figure 2, la pièce de maintien 18 est pourvue d'un premier capot 20a qui coiffe une extrémité d'une aile supérieure 21a du déflecteur d'air 6 et d'un deuxième capot 20b qui coiffe une extrémité d'une aile inférieure 21b du déflecteur d'air 6. A cet effet, chaque capot 20a, 20b délimite une gorge pour la réception de l'aile 21a, 21b que comprend le déflecteur d'air 6. On note que la pièce de maintien 18 couvre également une portion d'assemblage du déflecteur d'air 6, située sous les ailes 21a ou 21b. On peut également mentionner que, en plus de couvrir les ailes 21a ou 21b, les capots 20a, 20b présentent une section parfaitement complémentaire de la section de l'aile qu'ils couvrent, limitant ainsi les perturbations aérauliques générées par des espaces entre les pièces.

Le déflecteur d'air 6 du balai d'essuyage 1 peut être formé d'une pluralité de sous-déflecteurs distincts et rapportés de part et d'autre de la pièce de maintien 18. Alternativement, ce déflecteur d'air 6 peut être monobloc et constitué d'une seule et unique pièce qui s'étend d'une extrémité à l'autre du balai d'essuyage. Dans une telle situation, le déflecteur d'air 6 peut présenter une découpe dans laquelle se loge la pièce de maintien 18.

La pièce de maintien 18 comprend un plateau 22 qui est terminé longitudinalement par les deux capots référencés 20a et 20b. Le plateau 22 est pourvu de deux rebords latéraux 23 qui recouvrent partiellement la lame racleuse 7 et/ou une portion d'accrochage du déflecteur d'air 6. Le plateau 22 s'étend selon un plan de plateau F qui est parallèle à l'axe longitudinal X et parallèle à un plan dans lequel s'étendent les éléments de structures du balai. En section, le plateau 22 st ses rebords latéraux 23 présente une forme sensiblement en « U », une partie des éléments de structure du balai d'essuyage 1 étant logée dans cette forme en « U ».

Le plot 19 est avantageusement pourvu d'un logement 24 pour la réception du doigt 15. Le logement 24 s'étend orthogonalement à l'axe longitudinal X et est ménagé parallèlement au plan de plateau F, en s'étendant selon l'axe transversal Y. Le logement 24 est conformé en un cylindre de diamètre D. Plus particulièrement, le logement 24 est ménagé selon un plan médian E de la pièce de maintien 18, le plan médian E étant parallèle à l'axe transversal Y. Le plan médian E sépare la pièce de maintien 18 en deux parties d'une égale longueur L prise selon l'axe longitudinal X entre le plan médian E et une extrémité inférieure 27b de la pièce de maintien 18 d'une part, et entre le plan médian E et une extrémité supérieure 27a de la pièce de maintien 18 d'autre part. Le plot 19 comporte une première face 29 et une deuxième face 30 qui sont parallèles l'une à l'autre et s'étendent parallèlement à l'axe longitudinal X, tout en étant orthogonales au plan de plateau F. Le logement 24 débouche à travers la première face 29 par l'intermédiaire d'un premier orifice 50 et à travers la deuxième face 30 par l'intermédiaire d'un deuxième orifice 51.

Le plot 19 est préférentiellement parallélépipédique, tel qu'illustré sur les figures 4 à 13. Autrement dit, le plot 19 forme un volume comportant six faces qui sont formées de parallélogrammes, dont la première face 29 et la deuxième face 30.

Le plot 19 est équipé d'au moins une platine 200, 200a, 200b qui s'étend à l'intérieur d'un plan de platine G. Autrement dit, la platine 200, 200a, 200b est préférentiellement agencée en une plaque plane qui s'étend à l'intérieur du plan de platine G. Le plan de platine G est notamment orthogonal au plan de plateau F et parallèle à l'axe longitudinal X. De préférence, la platine 200, 200a, 200b est parallélépipédique, et de section rectangulaire. Autrement dit, la platine 200, 200a, 200b forme un volume comportant six faces qui sont formées de parallélogrammes, dont une première surface 201 et une deuxième surface 202. La première surface 201 et la deuxième surface 202 sont planes et préférentiellement parallèles l'une à l'autre. La première surface 201 et la deuxième surface 202 sont notamment parallèles à la première face 29 et/ou la deuxième face 30 du plot 19. Plus particulièrement encore, la première surface 201 est ménagée dans le prolongement de la première face 29 ou de la deuxième face 30 du plot 19. La première surface 201 est une face externe de la platine 200, 200a, 200b tandis que la deuxième surface 202 est une face interne de platine 200, 200a, 200b, la face interne surplombant notamment le plateau 22.

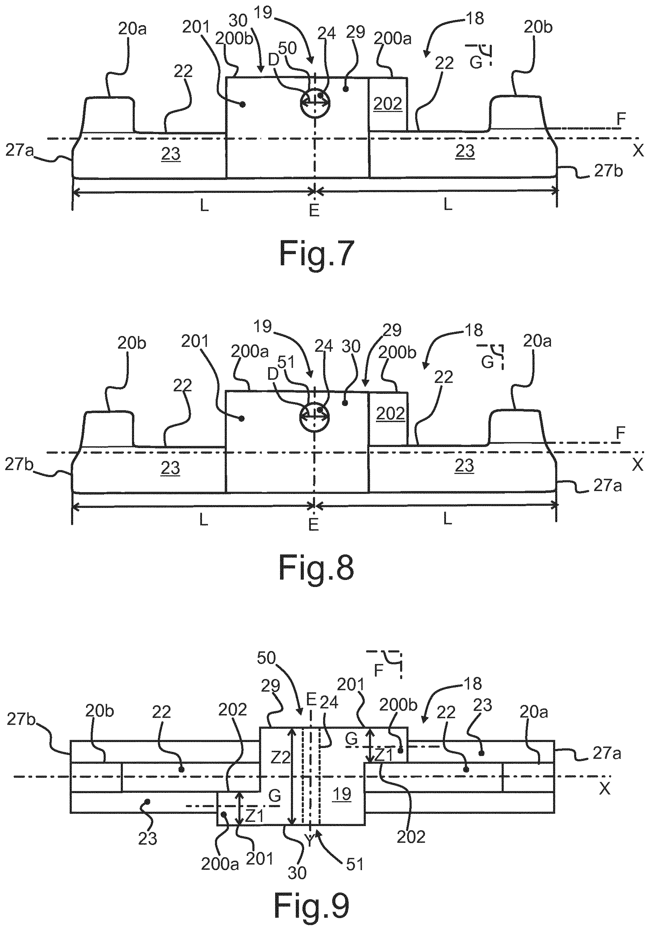

La platine 200, 200a, 200b présente une épaisseur de platine Z1 (figures 6 ou 9) prise selon l'axe transversal Y et entre la première surface 201 et la deuxième surface 202 qui est strictement inférieure à une épaisseur de plot Z2 prise entre la première face 29 et la deuxième face 30 selon l'axe transversal Y également, tel que visible sur les figures 6 et 9. Ces dispositions sont telles qu'un poids et un encombrement de la pièce de maintien 18 sont le plus réduit possible, en tenant compte du fait que cette pièce de maintien est moulée de manière unitaire, c'est-à-dire monobloc, à partir d'une même matière synthétique.

Selon une première variante illustrée sur les figures 4 à 6, le plot 19 est pourvu d'une unique platine 200, dont la première surface 201 est disposée dans le prolongement de la deuxième face 30. Selon cette variante, le plot 19 et l'unique platine 200, forment un ensemble monobloc conformé en « L ».

Selon une deuxième variante illustrée sur les figures 7 à 9, le plot 19 est pourvu de deux platines 200a, 200b, à savoir une première platine 200a, dont la première surface 201 est ménagée dans le prolongement de la deuxième face 30 du plot 19 et une deuxième platine 200b dont la première surface 201 est ménagée dans le prolongement de la première face 29 du plot 19. Selon cette variante, le plot 19 et les platines 200a, 200b forment un ensemble monobloc conformé en « S ».

On note à ce stade de la description que, selon l'une ou l'autre des variantes décrites ci-dessus, le plot 19, le plateau 22 et la platine 200, 200a, 200b forment un ensemble monobloc, réalisé d'un seul tenant, notamment par moulage d'un matériau polymère. Autrement dit, le plot 19, le plateau 22 et la platine 200, 200a, 200b ne sont dissociables l'un de l'autre qu'à partir d'une détérioration de la pièce de maintien 18, aucune opération de démontage et/ou de désassemblage ne permettant une telle désolidarisation. Il y a une continuité de matière de l'un à l'autre du plot 19, du plateau 22 et des platines 200, 200a, 200b, ceux-ci ayant été différentiés ci-dessus les uns des autres pour une meilleure clarté de description. Une telle particularité permet de maintenir le coût de fabrication d'une telle pièce compatible avec le marché dans lequel elle sera distribuée, c'est-à-dire le marché des balais d'essuyage des réseaux après-vente.

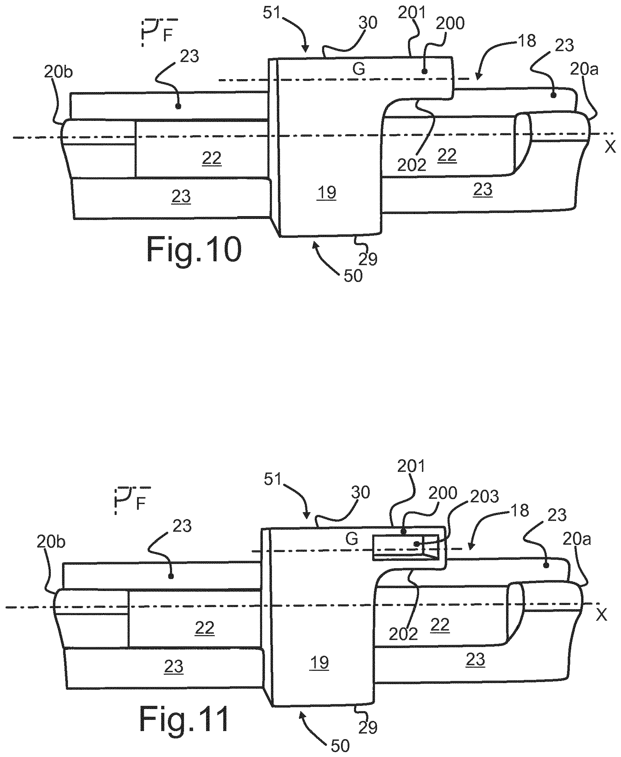

Sur les figures 10 à 14, la platine 200, 200a, 200b comprend un organe de réception 201, 203 de la languette 40 équipant la partie de connexion 9.

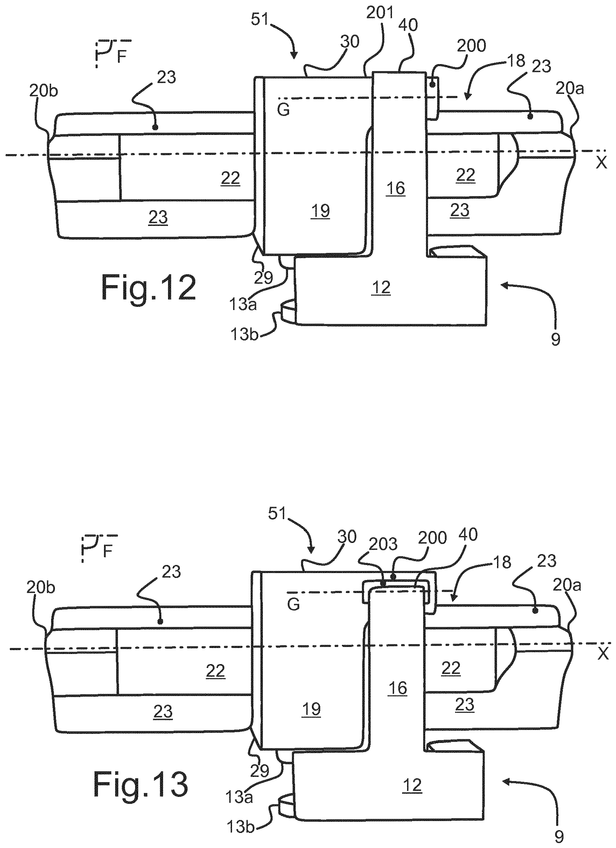

Selon une première forme de réalisation illustrée sur les figures 10 et 12, l'organe de réception 201, 203 est constitué de la première surface 201 de l'unique platine 200 contre laquelle la languette 40 vient en butée, telle qu'illustrée sur la figure 12. L'organe de réception est donc une surface contre laquelle s'appuie la languette 40 de la pièce de connexion. La pièce de maintien 18 peut également comporter deux platines telles que détaillées ici.

Selon une deuxième forme de réalisation illustrée sur les figures 11 et 13, l'organe de réception 201, 203 est constitué d'une cavité 203 ménagée à travers l'unique platine 200 à l'intérieur de laquelle la languette 40 vient s'insérer, tel qu'illustré sur la figure 13. De préférence, la cavité 203 est ménagée selon le plan de platine G. La cavité 203 peut être borgne dans un plan contenant le plan de plateau. Alternativement, cette cavité 203 peut être traversante, de part en part de la platine 200. La pièce de maintien 18 peut également comporter deux platines telles que détaillées ici.

Selon que le véhicule automobile est un véhicule automobile à direction à droite ou bien un véhicule automobile à direction à gauche, il est possible d'utiliser l'un ou l'autre des orifices 50, 51 pour introduire le doigt 15 à l'intérieur du logement 24, et l'une ou l'autre des platines 200a, 200b pour recevoir la languette 40 afin d'équiper soit un véhicule automobile à direction à droite ou bien un véhicule automobile à direction à gauche. Ces dispositions permettent une mise en place optimisée du balai d'essuyage 1 sur le pare-brise selon la direction du véhicule automobile à partir d'un choix judicieux de la pièce de maintien 18.

On note à ce stade de la description que, selon l'une ou l'autre des variantes décrites ci-dessus, le plot 19 et le plateau 22 forment un ensemble monobloc, réalisé d'un seul tenant, notamment par moulage d'un matériau polymère. Autrement dit, le plot 19 et le plateau 22 ne sont dissociables l'un de l'autre qu'à partir d'une détérioration de la pièce de maintien 18, aucune opération de démontage et/ou de désassemblage ne permettant une telle désolidarisation. Il y a une continuité de matière de l'un à l'autre du plot 19 au plateau 22, ceux-ci ayant été différentiés ci-dessus les uns des autres pour une meilleure clarté de description. De telles particularités permettent de maintenir le coût de fabrication d'un tel dispositif de connexion compatible avec le marché dans lequel il sera distribué, c'est-à-dire le marché des balais d'essuyage des réseaux après-vente.

Selon l'une quelconque des variantes et formes de réalisation décrites ci-dessus, le dispositif de connexion 2, notamment le système d'essuyage 5, comprend une enveloppe rigide ou semi-rigide qui est apte à recouvrir au moins le dispositif de connexion 2 et préférentiellement le dispositif de connexion 2 et la partie de connexion 9 pour protéger l'une et/ou l'autre de projections d'eau et/ou de salissures. L'enveloppe est notamment agencée en une demi-coquille qui forme une coque de protection du dispositif de connexion 2 au moins. De préférence, l'enveloppe est rapportée par clippage sur le dispositif de connexion 2, voire sur la tige du bras de manoeuvre. Ces dispositions visent à rendre pérenne le dispositif de connexion 2, le balai d'essuyage 1 et le système d'essuyage 5.

## Revendications

1. Dispositif de connexion (2) destiné à être interposé entre un bras de manoeuvre (4) et un balai d'essuyage (1) d'une surface vitrée d'un véhicule, comprenant une pièce de maintien (18) s'étendant le long d'un axe longitudinal (X), la pièce de maintien (18) étant porteuse du balai d'essuyage (1) et apte à être rapportée sur une partie de connexion (9) du bras de manoeuvre (4), la partie de connexion (9) comprenant un doigt (15) et une broche (16), la pièce de maintien (18) comprenant un plot (19) pourvu d'un logement (24) qui est apte à recevoir le doigt (15) de la partie de connexion (9), le logement (24) étant débouchant par l'intermédiaire d'un premier orifice (50) ménagé à travers une première face (29) du plot (19), le plot (19) étant équipé d'au moins une platine (200, 200a, 200b) pourvue d'un organe de réception (201, 203) apte à retenir une languette (40) que comprend la broche (16), la platine (200, 200a, 200b) étant délimitée par au moins une première surface (201) et une deuxième surface (202) qui sont parallèles à l'une quelconque au moins de la première face (29) et d'une deuxième face (30) du plot (19), **caractérisé en ce que** la platine (200, 200a, 200b) est d'une épaisseur de platine (Z1), prise selon un axe transversal (Y) orthogonal à l'axe longitudinal (X), et mesurée entre la première surface (201) et la deuxième surface (202), qui est strictement inférieure à une épaisseur de plot (Z2) mesurée entre la première face (29) et la deuxième face (30) selon l'axe transversal (Y).

2. Dispositif de connexion (2) selon la revendication 1, dans lequel le logement (24) débouche par l'intermédiaire d'un deuxième orifice (51) ménagé à travers une deuxième face (30) du plot (19).

3. Dispositif de connexion (2) selon la revendication 1, dans lequel au moins le plot (19), un plateau (22) duquel est issu le plot (19), et la platine (200, 200a, 200b) forment un ensemble monobloc, notamment réalisé par moulage d'un matériau polymère.

4. Dispositif de connexion (2) selon l'une quelconque des revendications précédentes, dans lequel la platine (200, 200a, 200b) s'étend à l'intérieur d'un plan de platine (G), qui est orthogonal à un plan de plateau (F) dans lequel un plateau (22) s'étend et qui est parallèle à l'axe longitudinal (X) selon lequel la pièce de maintien (18) s'étend.
).

5. Dispositif de connexion (2) selon l'une quelconque des revendications précédentes, dans lequel la platine (200, 200a, 200b) est délimitée par au moins une deuxième surface (202) qui est parallèle à l'une quelconque au moins de la première face (29) et d'une deuxième face (30) du plot (19).

6. Dispositif de connexion (2) selon l'une quelconque des revendications précédentes, dans lequel la pièce de maintien (18) est pourvu d'une unique platine (200) dont la première surface (201) est ménagée indifféremment dans le prolongement de la première face (29) ou de la deuxième face (30) délimitant le plot (19).

7. Dispositif de connexion (2) selon l'une quelconque des revendications précédentes, dans lequel la pièce de maintien (18) est pourvu de deux platines (200a, 200b), dont une première platine (200a) qui comporte une première surface (201) ménagée parallèlement à la première face (29) du plot (19) et une deuxième platine (200b) qui comporte une première surface (201) ménagée parallèlement à la deuxième face (30) du plot (19).

8. Dispositif de connexion (2) selon l'une quelconque des revendications précédentes, dans lequel l'organe de réception (201, 203) est constitué par la première surface (201) de la platine (200, 200a, 200b).

9. Dispositif de connexion (2) selon l'une quelconque des revendications précédentes, dans lequel l'organe de réception (201, 203) est constitué d'une cavité (203) traversante ménagée dans la platine (200, 200a, 200b).

10. Dispositif de connexion (2) selon l'une quelconque des revendications 1 à 8, dans lequel l'organe de réception (201, 203) est constitué d'une cavité (203) borgne ménagée dans la platine (200, 200a, 200b).

11. Dispositif de connexion (2) selon l'une quelconque des revendications précédentes, dans lequel le logement (24) est ménagé selon un plan médian (E) de la pièce de maintien (18).

12. Dispositif de connexion (2) selon l'une quelconque des revendications précédentes, dans lequel le logement (24) est ménagé selon l'axe transversal (Y) qui est parallèle à un plan de plateau (F) dans lequel un plateau (22) s'étend.

13. Balai d'essuyage (1) équipé d'un dispositif de connexion (2) selon l'une quelconque des revendications précédentes.

14. Système d'essuyage (5) comprenant le balai d'essuyage (1) selon la revendication 13 et le bras de manoeuvre (4) pourvu de la partie de connexion (9), ladite partie de connexion (9) comprenant un corps (12) équipé du doigt (15) et de la broche (16) qui sont ménagés parallèlement entre eux, le doigt (15) étant apte à être reçu à l'intérieur du logement (24) et la languette (40) étant apte à être maintenue par ou dans l'organe de réception (201, 202).

## Patentansprüche

1. Verbindungsvorrichtung (2), die zwischen einem Betätigungsarm (4) und einem Wischerblatt (1) einer verglasten Oberfläche eines Fahrzeugs angeordnet werden soll, umfassend ein Halteteil (18), das sich entlang einer Längsachse (X) erstreckt, wobei das Halteteil (18) das Wischerblatt (I) trägt und an einem Verbindungsteil (9) des Betätigungsarms (4) befestigt werden kann, wobei das Verbindungsteil (9) einen Finger (15) und einen Stift (16) umfasst, wobei das Halteteil (18) einen Zapfen (19) umfasst, der mit einem Gehäuse (24) versehen ist, **das zur** Aufnahme des Fingers (15) des Verbindungsteils (9) geeignet ist, wobei das Gehäuse (24) offen ist durch eine erste Öffnung (50), die durch eine erste Fläche (29) des Zapfens (19) vorgesehen ist, wobei der Zapfen (19) mit mindestens einer Platte (200, 200a, 200b) ausgestattet ist, die mit einem Aufnahmeelement (201, 203) versehen ist, das zur Haltung einer Zunge (40) geeignet ist, die vom Stift (16), vor Platte (200, 200a, 200b) umfasst wird, die durch mindestens eine erste Oberfläche (201) und eine zweite Oberfläche (202) begrenzt ist, die parallel sind zu einer der mindestens ersten Flächen (29) und einer zweiten Flächen (30) des Zapfens (19), **dadurch gekennzeichnet, dass** die Platte (200, 200a, 200b) eine Dicke der Platte (ZI) aufweist, entlang einer Querachse (Y) orthogonal zur Längsachse (X) aufgenommen und zwischen der ersten Oberfläche (201) und der zweiten Oberfläche (202) gemessen wird, die strikt kleiner ist als eine Zapfendicke (Z2), gemessen zwischen der ersten Oberfläche (29) und der zweiten Oberfläche (30) entlang der Querachse (Y).

2. Verbindungsvorrichtung (2) nach Anspruch 1, wobei das Gehäuse (24) durch eine zweite Öffnung (51) führt, die durch eine zweite Fläche (30) des Zapfens (19) vorgesehen ist.

3. Verbindungsvorrichtung (2) nach Anspruch 1, wobei der mindestens der Zapfen (19), eine Schale (22) von der der Zapfen (19) abgeleitet ist, und die Platte (200, 200a, 200b) eine Monoblockeinheit bilden, insbesondere durch Formen eines Polymermaterials hergestellt.

4. Verbindungsvorrichtung (2) nach einem der vorstehenden Ansprüche, wobei sich die Platte (200, 200a, 200b) innerhalb einer Plattenebene (G) erstreckt, die orthogonal zu einer Schalenebene (F) ist, in der sich eine Schale (22) erstreckt und die parallel zu die Längsachse (X), entlang der sich das Halteteil (18) erstreckt.

5. Verbindungsvorrichtung (2) nach einem der vorstehenden Ansprüche, wobei die Platte (200, 200a, 200b) durch mindestens eine zweite Oberfläche (202) begrenzt ist, die parallel zu einer der mindestens ersten Flächen (29) und einer zweiten Fläche (30) des Zapfens (19) verläuft.

6. Verbindungsvorrichtung (2) nach einem der vorstehenden Ansprüche, wobei das Halteteil (18) mit einer einzigen Platte (200) versehen ist, deren erste Oberfläche (201) gleichermaßen in der Verlängerung der ersten Fläche (29) vorgesehen ist, oder der zweiten Fläche (30), die den Zapfen (19) begrenzt.

7. Anschlussvorrichtung (2) nach einem der vorstehenden Ansprüche, wobei das Halteteil (18) mit zwei Platten (200a, 200b) versehen ist, einschließlich einer ersten Platte (200a), die eine erste Oberfläche (201) aufweist, die parallel zur ersten Fläche (29) des Zapfens (19) angeordnet ist, und einer zweiten Platte (200b), die eine erste Oberfläche (201) aufweist, die parallel zur zweiten Fläche (30) des Zapfens (19) angeordnet ist.

8. Verbindungsvorrichtung (2) nach einem der vorhergehenden Ansprüche, wobei das Aufnahmeelement (201, 203) aus der ersten Oberfläche (201) der Platte (200, 200a, 200b) besteht.

9. Anschlussvorrichtung (2) nach einem der vorstehenden Ansprüche, wobei das Aufnahmeelement (201, 203) aus einem Durchgangshohlraum (203) in der Platte (200, 200a, 200b) besteht.

10. Verbindungsvorrichtung (2) nach einem der Ansprüche 1 bis 8, wobei das Aufnahmeelement (201, 203) aus einem Blindhohlraum (203) in der Platte (200, 200a, 200b) besteht.

11. Anschlussvorrichtung (2) nach einem der vorstehenden Ansprüche, wobei das Gehäuse (24) nach einer Mittelebene (E) des Halteteils (18) besteht.

12. Verbindungsvorrichtung (2) nach einem der vorstehenden Ansprüche, wobei das Gehäuse (24) entlang der Querachse (Y) angeordnet ist, die parallel zu einer Schalenebene (F), in der sich ein Schale (22) erstreckt.

13. Wischerblatt (1), das mit einer Verbindungsvorrichtung (2) nach einem der vorstehenden Ansprüche ausgestattet ist.

14. Wischersystem (5), umfassend das Wischerblatt (1) nach Anspruch 13 und den Betätigungsarm (4) mit dem Verbindungsteil (9), wobei der Verbindungsteil (9) einen Körper (12) umfasst, der mit dem Finger (15) und dem Stift (16) ausgestattet ist, die parallel zueinander angeordnet sind, wobei der Finger (15) zur Aufnahme innerhalb des Gehäuses (24) und die Zunge (40) zur Wartung durch oder in der Aufnahmeelement (201.202) gehalten werden.

## Claims

1. Connecting device (2) intended to be interposed between an operating arm (4) and a wiper (1) of a glazed surface of a vehicle, comprising a holding piece (18) extending along a longitudinal axis (X), the holding piece (18) carrying the wiper (1) and able to be attached to a connecting part (9) of the operating arm (4), the connecting part (9) comprising a pin (15) and a clip (16), the holding piece (18) comprising a block (19) provided with a housing (24) which is able to accommodate the pin (15) of the connecting part (9), the housing (24) being open via a first orifice (50) formed through a first face (29) of the block (19), the block (19) being equipped with at least one flange (200, 200a, 200b) provided with a receiving member (201, 203) able to retain a tongue (40) that the clip (16) comprises, the flange (200, 200a, 200b) being delimited by at least one first surface (201) and a second surface (202) which are parallel to at least either one of the first face (29) and a second face (30) of the block (19), **characterized in that** the flange (200, 200a, 200b) is of a flange thickness (Z₁), considered along a transverse axis (Y) orthogonal to the longitudinal axis (X) and measured between the first surface (201) and the second surface (202) which is strictly smaller than a block thickness (Z₂) measured between the first face (29) and the second face (30) along the transverse axis (Y).

2. Connecting device (2) according to Claim 1, in which the housing (24) opens via a second orifice (51) formed through a second face (30) of the block (19).

3. Connecting device (2) according to Claim 1, in which at least the block (19), a plate (22) from which the block (19) is derived, and the flange (200, 200a, 200b) form a one-piece assembly, notably produced by moulding in a polymer material.

4. Connecting device (2) according to any one of the preceding claims, in which the flange (200, 200a, 200b) extends inside a flange plane (G) which is orthogonal to a plate plane (F) in which a plate (22) extends and which is parallel to the longitudinal axis (X) along which the holding piece (18) extends.

5. Connecting device (2) according to any one of the preceding claims, in which the flange (200, 200a, 200b) is delimited by at least a second surface (202) which is parallel to at least either one of the first face (29) and a second face (30) of the block (19).

6. Connecting device (2) according to any one of the preceding claims, in which the holding piece (18) is provided with a single flange (200) of which the first surface (201) is formed either in the continuation of the first face (29) or in the continuation of the second face (30) delimiting the block (19).

7. Connecting device (2) according to any one of the preceding claims, in which the holding piece (18) is provided with two flanges (200a, 200b), these being a first flange (200a) which comprises a first surface (201) formed parallel to the first face (29) of the block (19) and a second flange (200b) which comprises a first surface (201) formed parallel to the second face (30) of the block (19).

8. Connecting device (2) according to any one of the preceding claims, in which the receiving member (201, 203) is made up of the first surface (201) of the flange (200, 200a, 200b).

9. Connecting device (2) according to any one of the preceding claims, in which the receiving member (201, 203) is made up of a through-cavity (203) formed in the flange (200, 200a, 200b).

10. Connecting device (2) according to any one of Claims 1 to 8, in which the receiving member (201, 203) is made up of a blind cavity (203) formed in the flange (200, 200a, 200b).

11. Connecting device (2) according to any one of the preceding claims, in which the housing (24) is formed along a median plane (E) of the holding piece (18).

12. Connecting device (2) according to any one of the preceding claims, in which the housing (24) is formed along the transverse axis (Y) which is parallel to a plate plane (F) in which a plate (22) extends.

13. Wiper (1) equipped with a connecting device (2) according to any one of the preceding claims.

14. Wiping system (5) comprising the wiper (1) according to Claim 13 and the operating arm (4) provided with the connecting part (9), the said connecting part (9) comprising a body (12) equipped with the pin (15) and with the clip (16), which are formed parallel to one another, the pin (15) being able to be accommodated inside the housing (24) and the tongue (40) being able to be held by or in the receiving member (201, 202).
